(19) **Europäisches Patentamt / European Patent Office / Office européen des brevets**

(11) **EP 2 860 955 B1**

(12) **FASCICULE DE BREVET EUROPEEN**

(45) Date de publication et mention
de la délivrance du brevet:
**29.11.2017 Bulletin 2017/48**

(51) Int Cl.:
*H04N 1/409* (2006.01)    *G06K 9/38* (2006.01)

(21) Numéro de dépôt: **14187856.1**

(22) Date de dépôt: **07.10.2014**

(54) **Procédé de correction de la transparence d'un document dont les deux faces sont numérisées**

Korrekturverfahren der Transparenz eines Dokuments, dessen beide Seiten digitalisiert sind

Method for correcting the transparency of a document in which both sides are digitised

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.10.2013 FR 1359733**

(43) Date de publication de la demande:
**15.04.2015 Bulletin 2015/16**

(73) Titulaire: **SAGEMCOM DOCUMENTS SAS**
**92500 Rueil Malmaison (FR)**

(72) Inventeurs:
• **Berger, Jérôme**
  **92500 RUEIL MALMAISON (FR)**
• **Carrie, Aurore**
  **92500 RUEIL MALMAISON (FR)**

(74) Mandataire: **Le Guen-Maillet**
**5, place de Newquay**
**BP 70250**
**35802 Dinard Cedex (FR)**

(56) Documents cités:
**US-A- 5 832 137    US-A1- 2009 262 402**

• ANNA TONAZZINI ET AL: "Fast correction of bleed-through distortion in grayscale documents by a blind source separation technique", INTERNATIONAL JOURNAL OF DOCUMENT ANALYSIS AND RECOGNITION (IJDAR), SPRINGER, BERLIN, DE, vol. 10, no. 1, 9 mars 2006 (2006-03-09), pages 17-25, XP019493673, ISSN: 1433-2825
• FARNOOD MERRIKH-BAYAT ET AL: "Using Non-Negative Matrix Factorization for Removing Show-Through", 27 septembre 2010 (2010-09-27), LATENT VARIABLE ANALYSIS AND SIGNAL SEPARATION, SPRINGER BERLIN HEIDELBERG, BERLIN, HEIDELBERG, PAGE(S) 482 - 489, XP019153418, ISBN: 978-3-642-15994-7 * le document en entier *
• BOAZ OPHIR ET AL: "Show-Through Cancellation in Scanned Images using Blind Source Separation Techniques", IMAGE PROCESSING, 2007. ICIP 2007. IEEE INTERNATIONAL CONFERENCE ON, IEEE, PI, 1 septembre 2007 (2007-09-01), pages III-233, XP031158047, ISBN: 978-1-4244-1436-9

EP 2 860 955 B1

**Description**

La présente invention concerne un procédé et un dispositif de correction de la transparence d'un document dont les deux faces sont numérisées et constituées de pixels.

Lors de la numérisation d'un document recto verso, la transparence du document peut, dans certains cas, provoquer des artéfacts sur au moins une des faces numérisées. Par exemple, le papier utilisé pour des factures est parfois peu épais, peut comporter un logo sur une des faces qui peut, par transparence, être visible sur l'autre face numérisée.

Cette situation dégrade la qualité de la numérisation d'un document recto verso.

Le brevet US 5832137 divulgue un procédé de correction de la transparence d'un document dont les deux faces sont numérisées et constituées de pixels.

La présente invention a pour but de résoudre les inconvénients de l'art antérieur en proposant un procédé et un dispositif qui réduisent les artéfacts liés à la transparence d'un document lors de la numérisation de celui-ci.

A cette fin, selon un premier aspect, l'invention propose un procédé de correction de la transparence d'un document dont les deux faces sont numérisées et constituées de pixels, caractérisé en ce que le procédé comporte les étapes de :

- détection dans chaque face des zones contrastées,
- sélection des pixels des zones contrastées sur une seule des faces,
- sélection des pixels des zones contrastées sur une seule des faces,
- détermination d'au moins une matrice de transparence dont les coefficients diagonaux sont égaux et dont la somme des coefficients d'une ligne est égale à un,
- correction des deux faces numérisées à partir de la matrice déterminée.

La présente invention concerne aussi un dispositif de correction de la transparence d'un document dont les deux faces sont numérisées et constituées de pixels, caractérisé en ce que le dispositif comporte :

- des moyens de détection dans chaque face des zones contrastées,
- des moyens de sélection des pixels des zones contrastées sur une seule des faces,
- des moyens de détermination d'au moins une matrice de transparence dont les coefficients diagonaux sont égaux et dont la somme des coefficients d'une ligne est égale à un,
- des moyens de correction des deux faces numérisées à partir de la matrice déterminée.

Ainsi, les artéfacts liés à la transparence d'un document lors de la numérisation de celui-ci sont réduits.

Selon un mode particulier de l'invention, le procédé comporte en outre l'étape exécutée préalablement à l'étape de détection des zones contrastées de :

- réduction de la taille de l'image des faces en remplaçant des blocs de pixels par un pixel dont la valeur dépend des pixels remplacés.

Ainsi, il n'est pas nécessaire d'effectuer un recalage des faces.

Selon un mode particulier de l'invention, les faces numérisées sont compressées et le procédé comporte en outre l'étape exécutée préalablement à l'étape de réduction de la taille de l'image des faces, de décompression des faces.

Selon un mode particulier de l'invention, les faces numérisées sont compressées et préalablement à la détection des zones contrastées :

- on décompresse les faces,
- on réduit la taille de l'image des faces en remplaçant des blocs de pixels par un pixel dont la valeur dépend des pixels remplacés.

Ainsi, les artéfacts liés à la compression du document par blocs de pixels sont réduits.

Selon un mode particulier de l'invention, la détection des zones contrastées se décompose en:

- une affectation à chaque pixel de chaque image de face dont la taille est réduite d'une valeur binaire 1 ou 0,
- l'exécution d'une opération morphologique sur les pixels auxquels une valeur binaire a été affectée,
- la multiplication de la valeur de chaque pixel sur lequel l'opération morphologique a été exécutée par la valeur du pixel de l'autre face sur lequel l'opération morphologique a été exécutée et dont la position correspond à celle du pixel,
- la sélection des pixels dont le résultat de la multiplication est nul.

Ainsi, en ne sélectionnant que les pixels dont le résultat de la multiplication est nul, la correction de la transparence est grandement améliorée.

Selon un mode particulier de l'invention, la correction des deux faces numérisées à partir de la matrice déterminée est effectuée appliquant la correction sur chaque face décompressée en utilisant l'image réduite de l'autre face.

Ainsi, les artéfacts liés à la compression ou à un faible décalage entre les faces ne perturbent pas la correction de transparence.

Selon un mode particulier de l'invention, préalablement à la détection des zones contrastées, on recale les faces.

Ainsi, les écarts liés aux contraintes mécaniques du dispositif de numérisation sont compensés.

Selon un mode particulier de l'invention, la détection des zones contrastées se décompose en :

- une affectation à chaque pixel de chaque face dont la taille est réduite d'une valeur binaire 1 ou 0,
- l'exécution d'une opération morphologique sur les pixels auxquels une valeur binaire a été affectée,
- la multiplication de la valeur de chaque pixel sur lequel l'opération morphologique a été exécutée par la valeur du pixel de l'autre face sur lequel l'opération morphologique a été exécutée et dont la position correspond à celle du pixel,
- la sélection des pixels dont le résultat de la multiplication est nul.

Ainsi, seuls les pixels pour lesquels la transparence est mesurable sont analysés. La correction de la transparence est ainsi grandement améliorée.

Selon un mode particulier de l'invention, la correction des deux faces numérisées à partir de la matrice déterminée est effectuée appliquant la correction sur chaque face recalée en utilisant l'autre face.

Ainsi, les écarts liés aux contraintes mécaniques du dispositif de numérisation sont compensés.

Selon un mode particulier de l'invention, une unique matrice de transparence est déterminée.

Ainsi, la matrice peut être calculée plus rapidement.

Selon un mode particulier de l'invention, plusieurs matrices de transparence sont déterminées.

Ainsi, la matrice s'adapte à des variations de la transparence en fonction de la position.

L'invention concerne aussi les programmes d'ordinateur stockés sur un support d'informations, lesdits programmes comportant des instructions permettant de mettre en oeuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 représente un exemple de réalisation d'un dispositif de correction de la transparence d'un document ;
la Fig. 2 représente un premier exemple d'algorithme de correction de la transparence d'un document;
la Fig. 3 représente un second exemple d'algorithme de correction de la transparence d'un document.

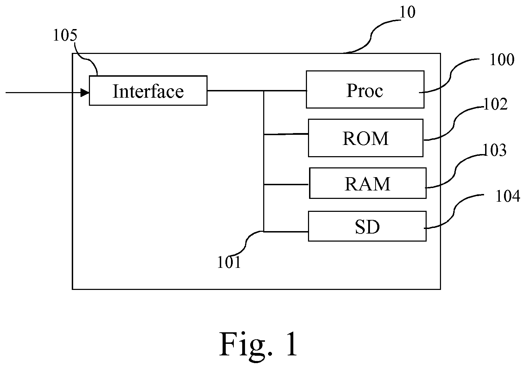

La **Fig. 1** représente un exemple de réalisation d'un dispositif de correction de la transparence d'un document.

Le dispositif de correction de la transparence d'un document 10 comprend :

- un processeur, micro-processeur, microcontrôleur 100 ;
- une mémoire volatile 103 ;
- une mémoire non volatile 102;
- éventuellement, un lecteur 104 de medium de stockage, tel qu'un lecteur de carte SD (*Secure Digital Card* en anglais ou *Carte Numérique Sécurisée* en français) ou un disque dur pour mémoriser les documents traités par la présente invention ;
- une interface 105 avec un réseau de communication, comme par exemple un réseau de radiotéléphonie cellulaire ou Internet par laquelle des documents à traiter selon la présente invention sont reçus.
- un bus de communication reliant le processeur 100 à la mémoire ROM 103, à la mémoire RAM 103, au lecteur de médium de stockage 104 et à l'interface 105.

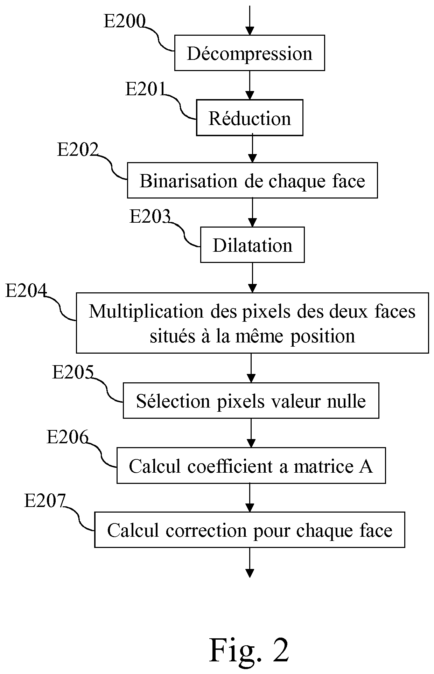

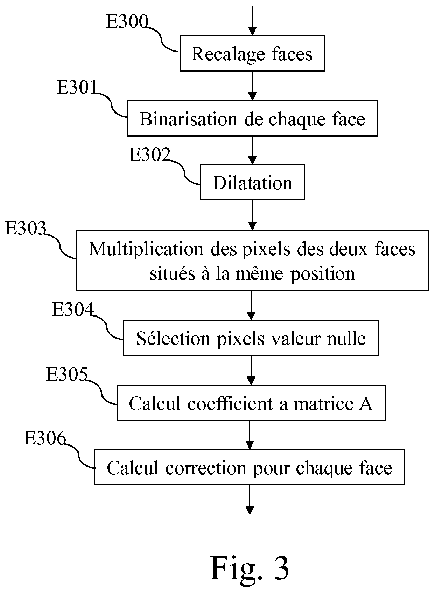

Le processeur 100 est capable d'exécuter des instructions chargées dans la mémoire volatile 103 à partir de la mémoire non volatile 102, d'une mémoire externe (non représentée), d'un support de stockage, tel qu'une carte SD ou autre, ou d'un réseau de communication. Lorsque le dispositif de correction de la transparence d'un document 10 est mis sous tension, le processeur 100 est capable de lire de la mémoire volatile 103 des instructions et de les exécuter. Ces instructions forment un programme d'ordinateur qui cause la mise en oeuvre, par le processeur 100, de tout ou partie des procédés décrits en relation avec la Fig. 2 ou 3.

Tout ou partie des procédés décrits en relation avec la Fig. 2 ou 3 peuvent être implémentés sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

Il est à remarquer ici que le dispositif de correction de la transparence peut être intégré dans un dispositif de numérisation recto verso.

La **Fig. 2** représente un premier exemple d'algorithme de correction de la transparence d'un document.

Plus précisément, le présent algorithme est exécuté par le processeur 100 du dispositif de correction de la transparence d'un document 10.

Le document est selon le premier exemple un document recto verso qui est numérisé et compressé selon un algorithme de compression de type JPEG.

A l'étape E200, le processeur 100 décompresse chacune des faces du document pour obtenir, pour chaque face du document, une image en niveau de gris dont les pixels varient entre la valeur nulle et 256. La présente invention est aussi applicable lorsque l'image est en couleur. Dans ce cas, le présent algorithme est exécuté sur chaque composante chromatique de l'image. Par exemple un pixel clair à une valeur supérieure ou égale à 128 et un pixel foncé à une valeur inférieure à 128

A l'étape suivante E201, le processeur 100 procède à une réduction de l'image en niveau de gris de chacune des faces. Par exemple, le processeur 100 partitionne chaque image en blocs de pixels. A chaque bloc de pixels, le processeur 100 associe un pixel d'une image réduite, la valeur du pixel de l'image réduite étant dépendante de la valeur des pixels du bloc de pixels. La valeur du pixel de l'image réduite est par exemple la moyenne des pixels du bloc de pixels.

La taille d'un bloc de pixels est égale à la taille des blocs utilisés pour la compression du document numérisé. La taille d'un bloc de pixels est par exemple égale à 8*8 pixels.

Au cours des étapes E202 à E206, le processeur 100 détecte les zones qui sont contrastées dans une des images réduites. En effet, les inventeurs ont constaté que s'il y a du contenu faiblement contrasté sur l'autre côté, il est très probable que celui-ci soit dû à la transparence alors que s'il y a du contenu contrasté des deux côtés, il s'agit vraisemblablement de contenu légitime qui risque de perturber la détection de transparence. Ceci permet en outre de restreindre l'analyse aux zones susceptibles de contenir de la transparence.

Il est à remarquer ici, que le contenu visible par transparence sur une face du document présente une symétrie horizontale. Par conséquent dans les traitements suivants, lorsqu'on met en relation des pixels des images des deux faces, il est nécessaire de parcourir l'une des images de face à l'envers par rapport à l'autre. Par exemple, si on parcourt le recto dans le sens de lecture usuel, ligne par ligne de haut en bas et de gauche à droite, le verso est parcouru de façon symétrique, ligne par ligne de haut en bas et de droite à gauche.

A l'étape E202, le processeur 100 binarise les deux images réduites en affectant à chacun des pixels la valeur binaire 1 ou 0. Par exemple, le processeur 100 utilise la méthode de Sauvola ou binarise les deux images réduites avec un seuil fixe ou variable. Par exemple, le seuil variable est défini par la relation suivante :

$$th = \propto * min + (1-\propto) * max$$

Où $\propto$ est une constante, par exemple égale à 0,5, *min* et *max* sont les minima et maxima des valeurs de pixels de l'image réduite pour laquelle la binarisation est effectuée.

A l'étape suivante E203, le processeur 100 effectue une opération morphologique sur les images réduites binarisées. L'opération morphologique est par exemple une dilatation. Deux images réduites sur lesquelles une dilatation a été effectuée sont ainsi obtenues.

A l'étape suivante E204, le processeur 100, pour chaque pixel d'une image réduite sur laquelle une dilatation a été effectuée, multiplie la valeur du pixel par la valeur du pixel de l'autre image réduite sur laquelle une dilatation a été effectuée et dont la position correspond à celle du pixel.

A cette étape, le processeur 100 crée une image binaire issue de la multiplication pour laquelle les pixels ont la valeur 1 si du contenu contrasté est présent sur les 2 faces pour le pixel considéré et 0 sinon.

A l'étape suivante E205, le processeur 100 sélectionne, pour chaque face, tous les pixels de l'image réduite qui correspondent à un pixel de l'image binaire issue de la multiplication pour laquelle les pixels ont la valeur 0.

A l'étape suivante E206, le processeur 100 calcule les coefficients d'une matrice de transparence A.

La transparence du document est modélisée par la formule suivante :

$$X = \begin{pmatrix} X_1 \\ X_2 \end{pmatrix} = \begin{pmatrix} a_{11} & a_{12} \\ a_{21} & a_{22} \end{pmatrix} \times \begin{pmatrix} S_1 \\ S_2 \end{pmatrix} = A \times S$$

Où $S_1$ et $S_2$ sont les deux faces théoriques c'est-à-dire n'ayant aucune transparence, où $A$ est la matrice de transparence et $X_1$ et $X_2$ sont les images résultant de la numérisation, c'est-à-dire comportant de la transparence ajoutée à chaque face n'ayant aucune transparence. Les coefficients $a_{ij}$ représentent la part de chaque face théorique dans l'image numérisée correspondante.

Les inventeurs ont considéré que la transparence est la même dans les 2 sens, recto vers verso et verso vers recto. Ce qui nous permet d'obtenir :

$$A = \begin{pmatrix} a_{11} & a_{12} \\ a_{12} & a_{11} \end{pmatrix}$$

Les inventeurs ont considéré que l'énergie totale n'est ni amplifiée ni atténuée par la transparence. Ceci est équivalent à une normalisation des coefficients : $a_{12} = 1 - a_{11}$.

La matrice $A$ a donc la forme :

$$A = \begin{pmatrix} a & 1-a \\ 1-a & a \end{pmatrix}$$

La modélisation de la transparence se résout à trouver S à partir de $A$ et $X$ :

$$S = A^{-1} * X$$

Le coefficient $a$ est choisi de manière à ce que la covariance entre les deux faces s'annule, en partant du principe que la covariance mesure la transparence. Le coefficient $a$ est donné par :

$$a = \frac{\sqrt{\sigma_2^4 + 2 \times \sigma_1^2 \times \sigma_2^2 + \sigma_1^4 - 4 \times \sigma_{12}^2} + \sigma_2^2 + \sigma_1^2 + 2 \times \sigma_{12}}{2 \times \sigma_2^2 + 2 \times \sigma_1^2 + 4 \times \sigma_{12}}$$

Où $\sigma_1^2$ est la variance des pixels sélectionnés à l'étape E205 de la première face, $\sigma_2^2$ est la variance des pixels sélectionnés à l'étape E205 de la deuxième face et $\sigma_{12}$ la covariance des pixels sélectionnés à l'étape E205 des 2 faces. Il convient de noter qu'une valeur de $a$ égale à 0,5 correspond à une transparence totale, de même une valeur de $a$ égale à 1 correspond à une opacité totale. En outre, une valeur de $a$ inférieure à 0,5 ou supérieure à 1 n'a pas de sens. Par conséquent, si la formule ci-dessus donne une valeur inférieure à 0,5, alors la valeur de $a$ sera fixée à 0,5. De même si la formule ci-dessus donne une valeur supérieure à 1, alors la valeur de $a$ sera fixée à 1.

En variante, un coefficient a est calculé pour chaque pixel sélectionné à l'étape E205. Selon cette variante, $\sigma_1^2$ est la variance des pixels voisins sélectionnés à l'étape E205 de la première face, $\sigma_2^2$ est la variance des pixels voisins sélectionnés à l'étape E205 de la deuxième face et $\sigma_{12}$ la covariance des pixels voisins sélectionnés à l'étape E205 des 2 faces.

Les pixels voisins sont par exemple les 8 ou 16 ou 32 pixels les plus proches du pixel pour lequel le calcul est effectué.

Selon une autre variante, la valeur de a est corrigée en appliquant une fonction correctrice croissante entre 0,5 et 1. Par exemple, cette fonction correctrice est une fonction linéaire :

$$2 \times (1 - a_m) \times a + 2 \times a_m - 1$$

Où $a_m$ est une constante comprise entre 0,5 et 1 qui représente le taux de transparence maximal accepté, par exemple $a_m = 0,75$.

Par exemple, la fonction correctrice est une fonction polynomiale :

$$4 \times (1 - a_m) \times (a - 0,5)^2 + a_m$$

A l'étape suivante E206, une correction de la transparence est effectuée pour chacune des images en niveau de gris obtenue à l'étape E200.

Pour s'affranchir des défauts liés à la compression JPEG, le processeur 100 applique la correction sur chaque image pleine taille obtenue à l'étape E200 en utilisant l'image réduite à l'étape E201 de l'autre face. Il est à remarquer ici qu'en procédant de la sorte, le présent algorithme n'a pas à effectuer un recalage précis des deux faces.

Le processeur 100 corrige la transparence en utilisant les formules suivantes :

$$\bar{R}(i,j) = \frac{a \times R(i,j) + (1-a) \times v(i/8, j/8)}{2 \times a - 1}$$

$$\bar{V}(i,j) = \frac{a \times V(i,j) + (1-a) \times r(i/8, j/8)}{2 \times a - 1}$$

Où $\bar{R}(i,j)$ est la valeur du pixel aux coordonnées (i, j) sur le recto corrigé, $R(i,j)$ est la valeur du pixel aux coordonnées (i, j) sur le recto d'entrée, $\bar{V}(i,j)$ est la valeur du pixel aux coordonnées (i, j) sur le verso corrigé, $V(i,j)$ est la valeur du pixel aux coordonnées (i, j) sur le verso d'entrée, $r(i/8, j/8)$ est la valeur du pixel aux coordonnées (i/8, j/8) sur l'image recto réduite à l'étape E201, $v(i/8, j/8)$ est la valeur du pixel aux coordonnées (i/8, j/8) l'image verso réduite à l'étape E201.

La **Fig. 3** représente un second exemple d'algorithme de correction de la transparence d'un document.

Plus précisément, le présent algorithme est exécuté par le processeur 100 du dispositif de correction de la transparence d'un document 10.

Le document est selon le premier exemple un document recto verso qui est numérisé en niveaux de gris. La présente invention est aussi applicable lorsque l'image est en couleur. Dans ce cas, le présent algorithme est exécuté sur chaque composante chromatique de l'image.

A l'étape E300, le processeur 100 effectue un recalage des deux faces du document de manière à corriger les erreurs d'alignement qui apparaissent lors de la numérisation des deux faces du document. Par exemple, le recalage peut être effectué par la méthode décrite dans Tonazzini, A., Bianco, G., Salerno, E.: Registration and enhancement of double-sided degraded manuscripts acquired in multispectral modality. In: 10th Interna-tional Conference on Document Analysis and Recognition, Spain, July 2009, pp. 546-550 (2009)

Au cours des étapes E301 à E304, le processeur 100 détecte les zones qui sont contrastées dans une des images recalées et non dans l'autre. En effet, les inventeurs ont constaté que s'il y a du contenu faiblement contrasté sur l'autre côté, il est très probable que celui-ci soit dû à la transparence alors que s'il y a du contenu contrasté des deux côtés, il s'agit vraisemblablement de contenu légitime qui risque de perturber la détection de transparence. Ceci permet en outre de restreindre l'analyse aux zones susceptibles de contenir de la transparence.

Il est à remarquer ici que le contenu visible par transparence sur une face du document présente une symétrie horizontale. Par conséquent, dans les traitements suivants, lorsqu'on met en relation des pixels des deux faces, il est nécessaire de parcourir l'une des faces à l'envers par rapport à l'autre. Par exemple, si on parcourt le recto dans le sens de lecture usuel, ligne par ligne de haut en bas et de gauche à droite, le verso est parcouru de façon symétrique, ligne par ligne de haut en bas et de droite à gauche.

A l'étape E301, le processeur 100 binarise l'image recalée de chaque face du document en affectant à chacun des pixels la valeur binaire 1 ou 0. Par exemple, le processeur 100 utilise la méthode de Sauvola ou binarise les deux images recalées avec un seuil fixe ou variable. Par exemple, le seuil variable est défini par la relation suivante :

$$th = \propto * min + (1 - \propto) * max$$

Où $\propto$ est une constante, par exemple égale à 0,5, *min* et *max* sont les minima et maxima des valeurs de pixels de l'image recalée de la face pour laquelle la binarisation est effectuée.

A l'étape suivante E302, le processeur 100 effectue une opération morphologique sur les images recalées et binarisées. L'opération morphologique est par exemple une dilatation. Deux images recalées sur lesquelles une dilatation a été effectuée sont ainsi obtenues.

A l'étape suivante E303, le processeur 100, pour chaque pixel d'une image recalée sur laquelle une dilatation a été effectuée, multiplie la valeur du pixel par la valeur du pixel de l'autre image recalée sur laquelle une dilatation a été effectuée et dont la position correspond à celle du pixel.

A cette étape, le processeur 100 crée une image binaire issue de la multiplication pour laquelle les pixels ont la valeur 1 si du contenu contrasté est présent sur les 2 images pour le pixel considéré et 0 sinon.

A l'étape suivante E304, le processeur 100 sélectionne, pour chaque image de face, tous les pixels de l'image qui correspondent à un pixel de l'image binaire issue de la multiplication et pour laquelle les pixels ont la valeur 0.

A l'étape suivante E305, le processeur 100 calcule les coefficients d'une matrice de transparence A.

La transparence du document est modélisée par la formule suivante :

$$X = \begin{pmatrix} X_1 \\ X_2 \end{pmatrix} = \begin{pmatrix} a_{11} & a_{12} \\ a_{21} & a_{22} \end{pmatrix} \times \begin{pmatrix} S_1 \\ S_2 \end{pmatrix} = A \times S$$

Où $S_1$ et $S_2$ sont les deux faces théoriques c'est-à-dire n'ayant aucune transparence, où $A$ est la matrice de transparence et $X_1$ et $X_2$ sont les images résultant de la numérisation, c'est-à-dire comportant de la transparence ajoutée à chaque face n'ayant aucune transparence. Les coefficients $a_{ij}$ représentent la part de chaque face théorique dans l'image numérisée correspondante.

Les inventeurs ont considéré que la transparence est la même dans les 2 sens, recto vers verso et verso vers recto. Ce qui nous permet d'obtenir :

$$A = \begin{pmatrix} a_{11} & a_{12} \\ a_{12} & a_{11} \end{pmatrix}$$

Les inventeurs ont considéré que l'énergie totale n'est ni amplifiée ni atténuée par la transparence. Ceci est équivalent à une normalisation des coefficients : $a_{12} = 1 - a_{11}$.

La matrice $A$ a donc la forme :

$$A = \begin{pmatrix} a & 1 - a \\ 1 - a & a \end{pmatrix}$$

La modélisation de la transparence se résout à trouver S à partir de $A$ et $X$ :

$$S = A^{-1} * X$$

Le coefficient $a$ est choisi de manière à ce que la covariance entre les deux faces s'annule, en partant du principe que la covariance mesure la transparence. Le coefficient $a$ est donné par :

$$a = \frac{\sqrt{\sigma_2^4 + 2 \times \sigma_1^2 \times \sigma_2^2 + \sigma_1^4 - 4 \times \sigma_{12}^2} + \sigma_2^2 + \sigma_1^2 + 2 \times \sigma_{12}}{2 \times \sigma_2^2 + 2 \times \sigma_1^2 + 4 \times \sigma_{12}}$$

Où $\sigma_1^2$ est la variance des pixels sélectionnés à l'étape E205 de la première face, $\sigma_2^2$ est la variance des pixels sélectionnés à l'étape E205 de la deuxième face et $\sigma_{12}$ la covariance des pixels sélectionnés à l'étape E205 des 2 faces. Il convient de noter qu'une valeur de $a$ égale à 0,5 correspond à une transparence totale, de même une valeur de $a$ égale à 1 correspond à une opacité totale. En outre, une valeur de $a$ inférieure à 0,5 ou supérieure à 1 n'a pas de sens. Par conséquent, si la formule ci-dessus donne une valeur inférieure à 0,5, alors la valeur de $a$ sera fixée à 0,5. De même si la formule ci-dessus donne une valeur supérieure à 1, alors la valeur de $a$ sera fixée à 1.

En variante, un coefficient a est calculé pour chaque pixel sélectionné à l'étape E205. Selon cette variante, $\sigma_1^2$ est la variance des pixels voisins sélectionnés à l'étape E205 de la première face, $\sigma_2^2$ est la variance des pixels voisins sélectionnés à l'étape E205 de la deuxième face et $\sigma_{12}$ la covariance des pixels voisins sélectionnés à l'étape E205 des 2 faces.

Les pixels voisins sont par exemple les 8 ou 16 ou 32 pixels les plus proches du pixel pour lequel le calcul est effectué.

Selon une autre variante, la valeur de a est corrigée en appliquant une fonction correctrice croissante entre 0,5 et 1. Par exemple, cette fonction correctrice est une fonction linéaire :

$$2 \times (1 - a_m) \times a + 2 \times a_m - 1$$

Où $a_m$ est une constante comprise entre 0,5 et 1 qui représente le taux de transparence maximal accepté, par exemple $a_m$ = 0,75.

Par exemple, la fonction correctrice est une fonction polynomiale :

$$4 \times (1 - a_m) \times (a - 0,5)^2 + a_m$$

A l'étape suivante E306, une correction de la transparence est effectuée pour chacune des images en niveau de gris obtenue à l'étape E300.

Pour s'affranchir des défauts liés à la compression JPEG, le processeur 100 applique la correction sur chaque image obtenue à l'étape E300 en utilisant l'image obtenue à l'étape E300 de l'autre face.

Le processeur 100 corrige la transparence en utilisant les formules suivantes :

$$\bar{R}(i,j) = \frac{a \times R(i,j) + (1 - a) \times v(i,j)}{2 \times a - 1}$$

$$\bar{V}(i,j) = \frac{a \times V(i,j) + (1 - a) \times r(i,j)}{2 \times a - 1}$$

Où $R(i,j)$ est la valeur du pixel aux coordonnées (i, j) sur le recto corrigé, $R(i, j)$ est la valeur du pixel aux coordonnées (i, j) sur le recto d'entrée, $\bar{V}(i,j)$ est la valeur du pixel aux coordonnées (i, j) sur le verso corrigé, $V(i,j)$ est la valeur du pixel aux coordonnées (i, j) sur le verso d'entrée, $r(i,j)$ est la valeur du pixel aux coordonnées (i, j) sur l'image recto, $v(i,j)$ est la valeur du pixel aux coordonnées (i, j) sur l'image verso.

Il est à remarquer ici que la réduction de la taille peut être faite même si les images d'origine ne sont pas compressées, elle peut aussi être faite selon d'autres méthodes de réduction telles que par exemple et de manière non limitative bilinéaire, bicubique, Lanczos.

L'avantage dans ce cas n'est évidemment plus de compenser les artéfacts liés à la compression mais uniquement de s'affranchir de l'étape de recalage fin et de se contenter d'un calage grossier.

Bien entendu, la présente invention n'est nullement limitée aux modes de réalisation décrits ici, mais englobe, bien au contraire, toute variante à la portée de l'homme du métier et particulièrement la combinaison de différents modes de réalisation de la présente invention.

**Revendications**

1. Procédé de correction de la transparence d'un document dont les deux faces sont numérisées et constituées de pixels, **caractérisé en ce que** le procédé comporte les étapes de :

   - binarisation de chaque pixel de chaque image de face,
   - exécution d'une opération morphologique sur les pixels binarisés,
   - multiplication de la valeur de chaque pixel binarisé sur lequel l'opération morphologique a été exécutée par la valeur du pixel binarisé de l'autre face sur lequel l'opération morphologique a été exécutée et dont la position correspond à celle du pixel, résultant en une image binaire pour laquelle les pixels ont la valeur 1 si du contenu contrasté est présent sur les deux faces pour le pixel considéré et la valeur 0 sinon,
   - sélection (E205) des pixels dont le résultat de la multiplication est nul,
   - détermination (E206) d'au moins une matrice de transparence dont les coefficients diagonaux sont égaux et dont la somme des coefficients d'une ligne est égale à un, les coefficients de la matrice étant déterminés à partir de la variance des pixels sélectionnés d'une face, de la variance des pixels sélectionnés de l'autre face et de la covariance des pixels sélectionnés des deux faces,
- correction (E207) des deux faces numérisées à partir de la matrice déterminée.

2. Procédé selon la revendication 1, **caractérisé en ce que** le procédé comporte en outre l'étape exécutée préalablement à l'étape de binarisation de chaque pixel de - réduction de la taille de l'image des faces en remplaçant des blocs de pixels par un pixel dont la valeur dépend des pixels remplacés et **en ce que** la binarisation de chaque pixel de chaque image de face est effectuée sur chaque pixel de chaque image de face dont la taille est réduite.

3. Procédé selon la revendication 2, **caractérisé en ce que** les faces numérisées sont compressées et **en ce que** le procédé comporte en outre l'étape exécutée préalablement à l'étape de réduction de la taille de l'image des faces, de décompression des faces.

4. Procédé selon la revendication 2, **caractérisé en ce que** la correction des deux faces numérisées à partir de la matrice déterminée est effectuée appliquant la correction sur chaque face décompressée en utilisant l'image réduite de l'autre face.

5. Procédé selon la revendication 1, **caractérisé en ce que** le procédé comporte en outre l'étape exécutée préalablement à l'étape de détection des zones contrastées de recalage des faces et **en ce que** la binarisation de chaque pixel de chaque image de face est effectuée sur chaque pixel de chaque image de face recalée.

6. Procédé selon l'une quelconque des revendications précédentes, **caractérisé en ce que** une unique matrice de transparence est déterminée.

7. Dispositif de correction de la transparence d'un document dont les deux faces sont numérisées et constituées de pixels, **caractérisé en ce que** le dispositif comporte :

- des moyens de binarisation de chaque pixel de chaque image de face,
- des moyens d'exécution d'une opération morphologique sur les pixels binarisés,
- des moyens de multiplication de la valeur de chaque pixel binarisé sur lequel l'opération morphologique a été exécutée par la valeur du pixel binarisé de l'autre face sur lequel l'opération morphologique a été exécutée et dont la position correspond à celle du pixel, résultant en une image binaire pour laquelle les pixels ont la valeur 1 si du contenu contrasté est présent sur les deux faces pour le pixel considéré et la valeur 0 sinon,
- des moyens de sélection des pixels dont le résultat de la multiplication est nul,
- des moyens de détermination d'au moins une matrice de transparence dont les coefficients diagonaux sont égaux et dont la somme des coefficients d'une ligne est égale à un, les coefficients de la matrice étant déterminés à partir de la variance des pixels sélectionnés d'une face, de la variance des pixels sélectionnés de l'autre face et de la covariance des pixels sélectionnés des deux faces,
- des moyens de correction des deux faces numérisées à partir de la matrice déterminée.

**Patentansprüche**

1. Verfahren zur Korrektur der Transparenz eines Dokuments, dessen beide Seiten digitalisiert sind und aus Pixeln bestehen, **dadurch gekennzeichnet, dass** das Verfahren die folgenden Schritte umfasst:

- Binarisieren jedes Pixels jedes Seitenbildes,
- Ausführen einer morphologischen Operation an den binarisierten Pixeln,
- Multiplizieren des Werts jedes binarisierten Pixels, an dem die morphologische Operation ausgeführt wurde, mit dem Wert des binarisierten Pixels der anderen Seite, an dem die morphologische Operation ausgeführt wurde und dessen Position der des Pixels entspricht, resultierend in einem binären Bild, bei dem die Pixel den Wert 1 haben, wenn kontrastreicher Inhalt auf den beiden Seiten für das betrachtete Pixel vorhanden ist, und ansonsten den Wert 0,
- Auswählen (E205) der Pixel, für die das Ergebnis der Multiplikation null ist,
- Bestimmen (E206) mindestens einer Transparenzmatrix, deren diagonale Koeffizienten gleich sind und für die die Summe der Koeffizienten einer Zeile gleich eins ist, wobei die Koeffizienten der Matrix anhand der Varianz der ausgewählten Pixel einer Seite, der Varianz der ausgewählten Pixel der anderen Seite und der Kovarianz der ausgewählten Pixel der beiden Seiten bestimmt werden,

- Korrigieren (E207) der beiden digitalisierten Seiten anhand der bestimmten Matrix.

2. Verfahren nach Anspruch 1, **dadurch gekennzeichnet, dass** das Verfahren darüber hinaus den vor dem Schritt des Binarisierens jedes Pixels ausgeführten Schritt des Reduzierens der Größe des Bildes der Seiten umfasst, bei dem Pixelblöcke durch ein Pixel ersetzt werden, dessen Wert von den ersetzten Pixeln abhängt, und dass das Binarisieren jedes Pixels jedes Seitenbildes an jedem Pixel jedes Seitenbildes, dessen Größe reduziert ist, ausgeführt wird.

3. Verfahren nach Anspruch 2, **dadurch gekennzeichnet, dass** die digitalisierten Seiten komprimiert sind und dass das Verfahren darüber hinaus den vor dem Schritt des Reduzierens der Größe des Bildes der Seiten ausgeführten Schritt des Dekomprimierens der Seiten umfasst.

4. Verfahren nach Anspruch 2, **dadurch gekennzeichnet, dass** die Korrektur der beiden digitalisierten Seiten anhand der bestimmten Matrix ausgeführt wird, indem die Korrektur auf jede dekomprimierte Seite unter Verwendung des reduzierten Bildes der anderen Seite angewandt wird.

5. Verfahren nach Anspruch 1, **dadurch gekennzeichnet, dass** das Verfahren darüber hinaus den vor dem Schritt des Detektierens der kontrastreichen Bereiche ausgeführten Schritt des Registrierens der Seiten umfasst und dass das Binarisieren jedes Pixels jedes Seitenbildes an jedem Pixel jedes registrierten Seitenbildes ausgeführt wird.

6. Verfahren nach einem der vorhergehenden Ansprüche, **dadurch gekennzeichnet, dass** eine einzige Transparenzmatrix bestimmt wird.

7. Vorrichtung zur Korrektur der Transparenz eines Dokuments, dessen beide Seiten digitalisiert sind und aus Pixeln bestehen, **dadurch gekennzeichnet, dass** die Vorrichtung umfasst:

- Mittel zum Binarisieren jedes Pixels jedes Seitenbildes,
- Mittel zum Ausführen einer morphologischen Operation an den binarisierten Pixeln,
- Mittel zum Multiplizieren des Werts jedes binarisierten Pixels, an dem die morphologische Operation ausgeführt wurde, mit dem Wert des binarisierten Pixels der anderen Seite, an dem die morphologische Operation ausgeführt wurde und dessen Position der des Pixels entspricht, resultierend in einem binären Bild, bei dem die Pixel den Wert 1 haben, wenn kontrastreicher Inhalt auf den beiden Seiten für das betrachtete Pixel vorhanden ist, und ansonsten den Wert 0,
- Mittel zum Auswählen der Pixel, für die das Ergebnis der Multiplikation null ist,
- Mittel zum Bestimmen mindestens einer Transparenzmatrix, deren diagonale Koeffizienten gleich sind und für die die Summe der Koeffizienten einer Zeile gleich eins ist, wobei die Koeffizienten der Matrix anhand der Varianz der ausgewählten Pixel einer Seite, der Varianz der ausgewählten Pixel der anderen Seite und der Kovarianz der ausgewählten Pixel der beiden Seiten bestimmt werden,
- Mittel zum Korrigieren der beiden digitalisierten Seiten anhand der bestimmten Matrix.

## Claims

1. Method for correcting the transparency of a document whose two faces are digitized and consist of pixels, **characterized in that** the method comprises the steps of:

- binarizing each pixel of each face image,
- executing a morphological operation on the binarized pixels,
- multiplying the value of each binarized pixel on which the morphological operation has been executed by the value of the other face's binarized pixel on which the morphological operation has been executed and whose position corresponds to that of the pixel, resulting in a binary image for which the pixels have the value 1 if contrasted content is present on the two faces for the pixel considered and the value 0 otherwise,
- selecting (E205) the pixels for which the result of the multiplication is zero,
- determining (E206) at least one transparency matrix whose diagonal coefficients are equal and for which the sum of the coefficients of a row is equal to one, the coefficients of the matrix being determined on the basis of the variance of the selected pixels of a face, of the variance of the selected pixels of the other face and of the covariance of the selected pixels of both faces,
- correcting (E207) the two faces digitized on the basis of the matrix determined.

**2.** Method according to Claim 1, **characterized in that** the method furthermore comprises the step executed prior to the step of binarizing each pixel of - reducing the size of the image of the faces by replacing blocks of pixels with a pixel whose value depends on the replaced pixels and **in that** the binarizing of each pixel of each face image is performed on each pixel of each face image whose size is reduced.

**3.** Method according to Claim 2, **characterized in that** the digitized faces are compressed and **in that** the method furthermore comprises the step executed prior to the step of reducing the size of the image of the faces, of decompressing the faces.

**4.** Method according to Claim 2, **characterized in that** the correcting of the two digitized faces on the basis of the matrix determined is performed applying the correction to each decompressed face by using the reduced image of the other face.

**5.** Method according to Claim 1, **characterized in that** the method furthermore comprises the step executed prior to the step of detecting the contrasted zones of registering the faces and **in that** the binarizing of each pixel of each face image is performed on each pixel of each registered face image.

**6.** Method according to any one of the preceding claims, **characterized in that** a single transparency matrix is determined.

**7.** Device for correcting the transparency of a document whose two faces are digitized and consist of pixels, **characterized in that** the device comprises:

- means for binarizing each pixel of each face image,
- means for executing a morphological operation on the binarized pixels,
- means for multiplying the value of each binarized pixel on which the morphological operation has been executed by the value of the other face's binarized pixel on which the morphological operation has been executed and whose position corresponds to that of the pixel, resulting in a binary image for which the pixels have the value 1 if contrasted content is present on the two faces for the pixel considered and the value 0 otherwise,
- means for selecting the pixels for which the result of the multiplication is zero,
- means for determining at least one transparency matrix whose diagonal coefficients are equal and for which the sum of the coefficients of a row is equal to one, the coefficients of the matrix being determined on the basis of the variance of the selected pixels of a face, of the variance of the selected pixels of the other face and of the covariance of the selected pixels of both faces,
- means for correcting the two digitized faces on the basis of the matrix determined.

Fig. 1

E200 — Décompression

E201 — Réduction

E202 — Binarisation de chaque face

E203 — Dilatation

E204 — Multiplication des pixels des deux faces situés à la même position

E205 — Sélection pixels valeur nulle

E206 — Calcul coefficient a matrice A

E207 — Calcul correction pour chaque face

# Fig. 2

E300 — Recalage faces

E301 — Binarisation de chaque face

E302 — Dilatation

E303 — Multiplication des pixels des deux faces situés à la même position

E304 — Sélection pixels valeur nulle

E305 — Calcul coefficient a matrice A

E306 — Calcul correction pour chaque face

Fig. 3

**EP 2 860 955 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5832137 A

**Littérature non-brevet citée dans la description**

- **TONAZZINI, A. ; BIANCO, G. ; SALERNO, E.** Registration and enhancement of double-sided degraded manuscripts acquired in multispectral modality. *10th Interna-tional Conference on Document Analysis and Recognition,* Juillet 2009, 546-550